# FASCICULE DE BREVET EUROPEEN

(11) **EP 2 718 388 B1**
(45) Date de publication et mention de la délivrance du brevet: **12.07.2017**
(21) Numéro de dépôt: 12728678.9
(22) Date de dépôt: 14.05.2012
(51) Int. Cl.: C09K 3/30, C09K 5/04, C08J 9/12, C11D 7/50

(54) **COMPOSITIONS BINAIRES DE 1,3,3,3-TETRAFLUOROPROPENE ET D'AMMONIAC**
BINÄRE ZUSAMMENSETZUNGEN AUS 1,3,3,3-TETRAFLUORPROPEN UND AMMONIAK
BINARY COMPOSITIONS OF 1,3,3,3-TETRAFLUOROPROPENE AND AMMONIA

(30) Priorité: 07.06.2011 FR 1154945
(43) Date de publication de la demande: 16.04.2014
(73) Titulaire: Arkema France, 92700 Colombes (FR)
(72) Inventeur: BOUTIER, Jean-Christophe, F-69600 Oullins (FR); RACHED, Wissam, F-69630 Chaponost (FR)
(74) Mandataire: Chahine, Audrey Claire
(86) Numéro de dépôt international: PCT/FR2012/051069
(87) Numéro de publication internationale: WO 2012/168607

(56) Documents cités:
- WO-A2-2007/126414
- US-A1- 2006 243 945
- US-A1- 2010 186 432

## Description

### DOMAINE DE L'INVENTION

La présente invention concerne des compositions binaires de 1,3,3,3-tétrafluoropropène, et leur utilisation, notamment en tant que fluides de transfert de chaleur.

### ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Il est toutefois nécessaire de mettre au point d'autres fluides de transfert de chaleur présentant un potentiel de réchauffement global (GWP) inférieur à celui des fluides de transfert de chaleur actuellement utilisés, et présentant des performances équivalentes ou améliorées.

L'utilisation de l'ammoniac en tant que fluide de transfert de chaleur est connue. Toutefois un certain nombre de problèmes sont associés à ce composé : une température de sortie de compresseur très élevée par rapport aux hydrofluorocarbures ; une absence de retour d'huile et l'obligation d'installer un séparateur d'huile ; une charge totale autorisée parfois limitée en raison de la toxicité du produit.

Le document WO 2007/126414 décrit un grand nombre de mélanges de composés de transfert de chaleur, et notamment des mélanges « comprenant » du 1,3,3,3-tétrafluoropropène (HFO-1234ze) et de l'ammoniac. Aucun exemple de composition comprenant ces deux composés (que ce soit avec ou sans des composés supplémentaires) n'est fourni, ni aucune gamme de concentration relative pour ces composés.

Le document US 2006/0243945 décrit un grand nombre de mélanges de composés de transfert de chaleur, et notamment des mélanges comprenant du HFO-1234ze et des mélanges comprenant de l'ammoniac, mais la combinaison de ces deux composés n'est pas divulguée.

Le document WO 2008/009922 décrit des compositions de transfert de chaleur, notamment à base de 1,2,3,3,3-pentafluoropropène (HFO-1225ye) et de tétrafluoropropène (HFO-1234) de manière générale (de préférence le 2,3,3,3-tétrafluoropropène ou HFO-1234yf), et pouvant comprendre des composés supplémentaires choisis parmi une liste comprenant notamment l'ammoniac.

Le document WO 2008/027555 décrit des compositions de transfert de chaleur, notamment à base de HFO-1225ye ou à base de HFO-1234yf, et pouvant comprendre un composé supplémentaire qui peut notamment être l'ammoniac.

Le document US 2010/186432 décrit des compositions présentant un GWP relativement faible, comprenant du 1,2,3,3,3-pentafluoropropene pour le remplacement du 1,1,1,2-tetrafluoroéthane.

Le document US 2006/243945 décrit des compositions comprenant une fluorooléfine, telle que le 1,2,3,3,3-pentafluoropropene, et au moins un autre composant.

Toutefois, il existe encore un besoin de mettre au point d'autres fluides de transfert de chaleur présentant un GWP relativement faible, et susceptibles de remplacer les fluides de transfert de chaleur usuels.

En particulier, il est souhaitable de mettre au point d'autres fluides de transfert de chaleur à bas GWP qui soient quasi-azéotropiques voire azéotropiques et / ou qui présentent de bonnes performances énergétiques par rapport à des fluides de transfert de chaleur usuels (tel que le R404A ou le R410A).

### RESUME DE L'INVENTION

L'invention concerne en premier lieu une composition binaire de 1,3,3,3-tétrafluoropropène et d'ammoniac.

Selon un mode de réalisation, la composition comprend :
- de 40 à 99 % d'ammoniac et de 1 à 60 % de 1,3,3,3-tétrafluoropropène ;
- de préférence de 60 à 98 % d'ammoniac et de 2 à 40 % de 1,3,3,3-tétrafluoropropène ;
- de préférence de 70 à 95 % d'ammoniac et de 5 à 30 % de 1,3,3,3-tétrafluoropropène ;
- de préférence de 75 à 90 % d'ammoniac et de 10 à 25 % de 1,3,3,3-tétrafluoropropène ;
- de préférence de 78 à 85 % d'ammoniac et de 15 à 22 % de 1,3,3,3-tétrafluoropropène.

Selon un mode de réalisation, le 1,3,3,3-tétrafluoropropène est sous forme cis ou sous forme trans ou est un mélange de forme cis et de forme trans, et, de préférence, au moins 80 % ou au moins 90 % ou au moins 95 % ou au moins 98 % ou au moins 99 % du 1,3,3,3-tétrafluoropropène est sous forme trans.

L'invention concerne également l'utilisation de la composition ci-dessus, en tant que fluide de transfert de chaleur.

Selon un mode de réalisation, la composition est quasi-azéotropique, de préférence est azéotropique.

L'invention concerne également une composition de transfert de chaleur comprenant la composition ci-dessus, ainsi qu'un ou plusieurs additifs choisis parmi les lubrifiants, les stabilisants, les tensioactifs, les agents traceurs, les agents fluorescents, les agents odorants, les agents de solubilisation et leurs mélanges, ladite composition de transfert de chaleur comprenant de préférence au moins un stabilisant.

L'invention concerne également une installation de transfert de chaleur comprenant un circuit de compression de vapeur contenant la composition selon l'invention en tant que fluide de transfert de chaleur ou contenant la composition de transfert de chaleur selon l'invention.

Selon un mode de réalisation, l'installation est choisie parmi les installations mobiles ou stationnaires de chauffage par pompe à chaleur, de climatisation, de réfrigération, de congélation et les cycles de Rankine, et notamment parmi les installations de climatisation automobile.

L'invention concerne également un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition selon l'invention.

Selon un mode de réalisation, le procédé est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C ; ou qui est un procédé de chauffage d'un fluide ou d'un corps, dans lequel la température du fluide ou du corps chauffé est de 30°C à 90°C, et de préférence de 35°C à 60°C, de manière plus particulièrement préférée de 40°C à 50°C.

Selon un mode de réalisation, le procédé est un procédé de refroidissement d'un fluide ou d'un corps, dans lequel la température du fluide ou du corps refroidi est de -40°C à -10°C, et de préférence de -35°C à -25°C, de manière plus particulièrement préférée de -30°C à -20°C.

Selon un mode de réalisation, le procédé est un procédé de chauffage d'un fluide ou d'un corps, dans lequel la température du fluide ou du corps chauffé est supérieure à 90°C, de préférence supérieure ou égale à 100°C ou supérieure ou égale à 110°C, et de préférence inférieure ou égale à 120°C.

L'invention concerne également un procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition selon l'invention.

L'invention concerne également l'utilisation de la composition selon l'invention, en tant que solvant.

L'invention concerne également l'utilisation de la composition selon l'invention, en tant qu'agent d'expansion.

L'invention concerne également l'utilisation de la composition selon l'invention, en tant qu'agent de propulsion, de préférence pour un aérosol.

L'invention concerne également l'utilisation de la composition selon l'invention, en tant qu'agent de nettoyage.

La présente invention permet de répondre aux besoins ressentis dans l'état de la technique. Elle fournit plus particulièrement de nouvelles compositions à bas GWP susceptibles d'être utilisées (entre autres) en tant que fluides de transfert de chaleur, notamment en remplacement des fluides de transfert de chaleur usuels.

En particulier, l'invention fournit des compositions azéotropiques ou quasi-azéotropiques.

Dans certains modes de réalisation, l'invention fournit des fluides de transfert de chaleur qui présentent de bonnes performances énergétiques par rapport à des fluides de transfert de chaleur usuels.

Dans certains modes de réalisation, les compositions selon l'invention présentent notamment une capacité volumétrique améliorée et / ou un coefficient de performance amélioré par rapport aux compositions de l'état de la technique.

Enfin, l'invention permet de surmonter partiellement ou totalement les problèmes traditionnellement associés à l'ammoniac et listés ci-dessus.

### BREVE DESCRIPTION DES FIGURES

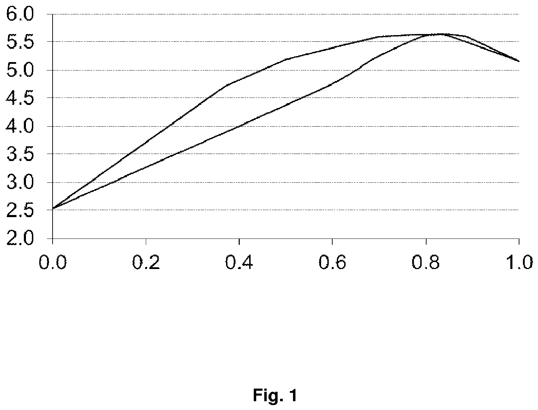

La figure 1 représente les données d'équilibre vapeur / liquide à 5°C de mélanges binaires de HFO-1234ze et de NH₃, mettant en évidence l'existence d'un azéotrope et de quasi-azéotropes. La proportion de NH₃ entre 0 et 1 (=100%) est représentée en abscisse, et la pression en bar est représentée en ordonnée.

### DESCRIPTION DE MODES DE REALISATION DE L'INVENTION

L'invention est maintenant décrite plus en détail et de façon non limitative dans la description qui suit.

Sauf mention contraire, dans l'ensemble de la demande les proportions de composés indiquées sont données en pourcentages molaires.

Selon la présente demande, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

Par « composé de transfert de chaleur », respectivement « fluide de transfert de chaleur » (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par « composition de transfert de chaleur » on entend une composition comprenant un fluide de transfert de chaleur et éventuellement un ou plusieurs additifs qui ne sont pas des composés de transfert de chaleur pour l'application envisagée.

Les additifs peuvent notamment être choisis parmi les lubrifiants, les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur.

Les stabilisants peuvent notamment être choisis parmi les composés amines, et en particulier parmi la triéthylamine, la tributylamine, la diisopropylamine, la triisopropylamine, la triisobutylamine, la p-phénylènediamine, la diphénylamine, les dialkylamines, la (N-(1- méthyléthyl)-2-propylamine, les composés pipéridyles, pipéridinyles, pipérazinone et alkoxypipéridinyles présentant des substituants alkyles, la 2,2,6,6-tétraméthyl-4-pipéridone, le 2,2,6,6-tétraméthyl-4-pipéridinol, le bis(1,2,2,6,6-pentaméthylpipéridyl)sebacate, le di-(2,2,6,6-tétraméthyl-4-pipéridyl)sebacate, le poly-(N-hydroxyéthyl-2,2,6, 6-tétraméthyl-4-hydroxy-pipéridylsuccinate, la 2,2,6,6-tétraméthyl-4-pipéridone, le 2,2,6,6-tétraméthyl-4-piperidinol, le bis-(1,2,2,6,6-pentaméthylpipéridyl)sebacate, le di-(2,2,6,6-tétraméthyl-4-pipéridyl)sebacate, le poly-(N-hydroxyéthyl-2,2,6,6-tétraméthyl-4-hydroxy-pipéridylsuccinate, et les combinaisons de ceux-ci. Une description détaillée de ces stabilisants figure par exemple dans le document WO 2008/042066.

Les stabilisants peuvent également être choisis parmi les dérivés de la benzophénone, et notamment parmi la 2,5-difluorobenzophénone, la 2',5'-dihydroxyacétophénone, la 2-aminobenzophénone, la 2-chlorobenzophénone, la 2-fluorobenzophénone, la 2-hydroxybenzophénone, la 2-méthylbenzophénone, la 2-amino-4'-chlorobenzophénone, la 2-amino-4'-fluorobenzophénone, la 2-amino-5-bromo-2'chlorobenzophénone, la 2-amino-5-chlorobenzophénone, la 2-amino-5-chloro-2'-fluorobenzophénone, la 2-amino-5-nitrobenzophénone, la 2-amino-5-nitro-2'-chlorobenzophénone, la 2-amino-2',5-dichlorobenzophénone, la 2-chloro-4'fluorobenzophénone, la 2-hydroxy-4-methoxybenzophénone, la 2-hydroxy-5-chlorobenzophénone, la 2-méthylamino-5-chlorobenzophénone, la 3-méthylbenzophénone, la 3-nitrobenzophénone, la 3-nitro-4'-chloro-4-fluorobenzophénone, la 4-chlorobenzophénone, la 4-fluorobenzophénone, la 4-hydroxybenzophénone, la 4-méthoxybenzophénone, la 4-méthylbenzophénone, la 4-nitrobenzophénone, la 4-phénylbenzophénone, la 4-chloro-3-nitrobenzophénone, la 4-hydroxy-4'-chlorobenzophénone, la 2,4-dihydroxybenzophénone, la 2,4-diméthylbenzophénone, la 2,5-diméthylbenzophénone, la 3,4-diaminobenzophénone, la 3,4-dichlorobenzophénone, la 3,4-difluorobenzophénone, la 3,4-dihydroxybenzophénone, la 3,4-diméthylbenzophénone, la 4,4'-bis(diéthylamine)benzophénone, la 4,4'-bis(diméthylamine)benzophénone, la 4,4'-dichlorobenzophénone, la 4,4'-difluorobenzophénone, la 4,4'-dihydroxybenzophénone, la 4,4'-diméthoxybenzophénone, et les combinaisons de ceux-ci. Une description détaillée de ces stabilisants figure par exemple dans le document WO 2008/027596.

Les stabilisants peuvent également être choisis parmi les composés phénol, et notamment parmi le 2,6-di-tert-butyl-4-méthylphénol, le 2,6-di-tert-butyl-4-éthylphénol, le 2,4-diméthyl-6-tertbutylphénol, le tocophérol, l'hydroquinone, la t-butyl hydroquinone, le 4,4'-thio-bis(2-méthyl-6-tert-butylphénol, le 4,4'-thiobis(3-méthyl-6-tertbutylphénol), le 2,2'-thiobis(4-méthyl-6-tert-butylphénol), le 4,4'méthylènebis(2,6-di-tert-butylphénol), le 4,4'-bis(2,6-di-tertbutylphénol), le 2,2'-méthylenebis(4-éthyl-6-tertbutylphénol); le 2,2'-méthylènebis(4-méthyl-6-tert-butylphénol), le 4,4-butylidènebis(3-méthyl-6-tert-butylphénol), le 4,4-isopropylidènebis(2,6-di-tertbutylphénol), le 2,2'-méthylènebis(4-méthyl-6-nonylphénol), le 2,2'-isobutylidènebis(4,6-diméthylphénol), le 2,2'-méthylènebis(4-méthyl-6-cyclohexylphénol, le 2,2'-méthylènebis(4-éthyl-6-tert-butylphénol), l'hydroxytoluène butylé (BHT), le 2,6-di-tert-alpha-diméthylamino-p-crésol, le 4,4-thiobis(6-tert-butyl-m-crésol), les acylaminophénols, le 2,6-di-tert-butyl-4(N,N'-diméthylaminométhylphénol), le bis(3-méthyl-4-hydroxy-5-tert-butylbenzyl)sulfure, le bis(3,5-di-tert-butyl-4-hydroxybenzyl)sulfure et les combinaisons de ceux-ci. Une description détaillée de ces stabilisants figure par exemple dans le document WO 2008/027594.

Les stabilisants peuvent également être choisis parmi les composés alkylsilanes, et notamment parmi les silanes substitués de formule SiₙR₂ₙ₊₂, où chaque R représente de manière indépendante H, un groupement silyle supplémentaire, un groupement alkyle, un groupement alkoxy, un groupement amine, un groupement vinyle ou un groupement phényle, et où le groupement R peut être substitué par des halogènes ou des groupements amines. Le bis(diméthylamino)méthylsilane, le tris(triméthylsilyl)silane, le vinyltriéthoxysilane et le vinyltriméthoxysilane sont préférés. Une description détaillée de ces stabilisants figure par exemple dans le document WO 2008/027595.

Les stabilisants peuvent également être choisis parmi les liquides ioniques, et notamment les liquides ioniques comprenant un cation choisi parmi les cations pyridinium, pyridazinium, pyrimidinium, pyrazinium, imidazolium, pyrazolium, thiazolium, oxazolium, triazolium, phosphonium et ammonium, lesdits cations étant éventuellement substitués ; et comprenant un anion choisi parmi [CH₃CO₂]⁻, [HSO₄]⁻, [CH₃OSO₃]⁻, [C₂H₅OSO₃]⁻, [AlCl₄]⁻, [CrO₃]²⁻, [HCO₃]⁻, [NO₂]⁻, [NO₃]⁻, [SO₄]²⁻, [PO₄]³⁻, [HPO₄]²⁻, [H₂PO₄]⁻, [HSO₃]⁻, [CuCl₂]⁻, CI-, Br, I⁻, SCN⁻ et les anions fluorés. Une description détaillée de ces stabilisants figure par exemple dans le document WO 2009/042855.

Les stabilisants peuvent également être choisis parmi les oxétanes de formule : 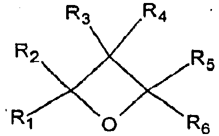 où les groupements R1 à R6 sont identiques ou différents et peuvent être choisis parmi l'hydrogènes, les alkyles substitués ou non et les aryles substitués ou non, et notamment parmi le 3-éthyl-3-hydroxyméthyloxétane, le 3-éthyl-3-((phénoxy)méthyl)-oxétane, et le 3-éthyl-3-((2-éthyl-hexyloxy)méthyl)-oxétane. Une description détaillée de ces stabilisants figure par exemple dans le document WO 2008/027519.

Les stabilisants peuvent également être choisis parmi les thiols, et notamment parmi le méthanethiol, l'éthanethiol, la coenzyme A, l'acide dimercaptosuccinique, le (R)-2-(4-méthylcyclohex-3-ényl)propane-2-thiol, la cystéine et le lipoamide ; et / ou parmi les thioesters, et notamment parmi le benzylphénylsulfure, le diphénylsulfure, le dibenzylsulfure, le dioctadécyl 3,3'-thiodipropionate, le didodécyl 3,3'-thiopropionate ; et les combinaisons de ceux-ci. Une description détaillée de ces stabilisants figure par exemple dans le document WO 2008/027517.

Les stabilisants peuvent également être choisis parmi l'acide ascorbique, le teréphthalate (notamment divinylteréphthalate ou diphénylteréphthalate), le nitrométhane et les combinaisons de ceux-ci. Une description détaillée de ces stabilisants figure par exemple dans le document WO 2008/027518.

Les stabilisants peuvent également être choisis parmi les lactones et notamment parmi la gamma-butyrolactone, la deltagluconolactone, la gamma-undécalactone, la 6,7-dihydro-4(5H)benzofuranone, la 5,7-bis(1,1-diméthyléthyl)-3-[2,3(ou 3,4)diméthylphenyl]-2(3H)-benzofuranone et les combinaisons de celles-ci. Une description détaillée de ces stabilisants figure par exemple dans le document WO 2008/027516.

Les stabilisants peuvent également être choisis parmi les terpènes, terpénoïdes et fullerènes et notamment parmi l'isoprène, le myrcène, l'allocimène, le bêta-ocimène, le terebène, le limonène, le rétinal, le pinène, le menthol, le géraniol, le farnésol, le phytol, la vitamine A, le terpinène, le delta-3-carène, le terpinolène, le phellandrène, le fenchène, le lycopène, le bêtacarotène, la zeaxanthine, l'hepaxanthine, l'isotrétinoïne, l'abiétane, l'ambrosane, l'aristolane, l'atisane, le beyérane, le bisabolane, le bornane, le caryophyllane, le cédrane, le dammarane, le drimane, l'erémophilane, l'eudesmane, le fenchane, le gammacérane, le germacrane, le gibbane, le grayanotoxane, le guaiane, l'himachalane, l'hopane, l'humulane, le kaurane, le labdane, le lanostane, le lupane, le p-menthane, l'oléanane, l'ophiobolane, le picrasane, le pimarane, le pinane, le podocarpane, le protostane, le rosane, le taxane, le thujane, le trichothécane, l'ursane, le buckminsterfullerène, le [5,6]-fullerène-C₇₀, fullerène-C₇₆, fullerene-C₇₈ et fullerene-C₈₄ et les combinaisons de ceux-ci. Une description détaillée de ces stabilisants figure par exemple dans le document WO 2008/027514.

Les stabilisants peuvent également être choisis parmi les arylalkyléthers, les composés aromatiques polyoxyalkylés ou les composés aromatiques alkylés (lubrifiants alkylbenzènes linéaires ou ramifiés), et notamment parmi les composés de formule : 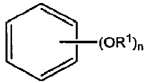 où n vaut 1, 2 ou 3 et R¹ est un groupement alkyle comprenant de 1 à 16 atomes de carbone, ou un groupement polyoxyalkylé comprenant au moins un groupement -CH₂CH₂O- ; et les combinaisons de ceux-ci. Des exemples sont l'anisole, le 1,4-diméthoxybenzène, le 1,4-diéthoxybenzène et le 1,3,5-triméthoxybenzène. Une description détaillée de ces stabilisants figure par exemple dans le document WO 2008/027513.

Les stabilisants peuvent également être choisis parmi les perfluoropolyéthers fonctionnalisés, et notamment parmi ceux décrits en détail dans le document WO 2008/027512 (notamment de la p.20 I.1 à la p.25 I.5).

Les stabilisants peuvent également être choisis parmi les époxydes, et notamment parmi le 1,2-propylène oxyde, le 1,2-butylène oxyde, le butylphénylglycidyléther, le pentylphénylglycidyléther, l'hexylphényl-glycidyléther, l'heptylphénylglycidyléther, l'octylphénylglycidyléther, le nonylphénylglycidyléther, le décylphénylglycidyléther, le glycidylméthyl-phényléther, le 1,4-glycidyl phényl diéther, le 4-méthoxyphénylglycidyléther, le naphthylglycidyléther, le 1,4-diglycidylnaphthyldiéther, le butylphénylglycidyléther, le n-butylglycidyléther, l'isobutylglycidyléther, l'hexanediol diglycidyléther, l'allylglycidyléther, le polypropylène glycol diglycidyléther et les combinaisons de ceux-ci.

Les stabilisants peuvent également être :
- un thiophosphate, notamment tel que décrit dans le document WO 2008/027512 à la p.25, I.7-17 ;
- un triphénylphosphorothionate butylé, notamment tel que décrit dans le document WO 2008/027512 à la p.25, I.18-26 ;
- un organophosphate, notamment tel que décrit dans le document WO 2008/027512 en p.26 I.1-p.27 I.2 ;
- un phosphite, notamment tel que décrit dans le document WO 2008/027512 en p.26 I.3-12 ;
- un époxyde fluoré, notamment tel que décrit dans le document WO 2008/027512 en p.31 I.6-23 ;
- un aryl sulfure, notamment choisi parmi le benzylphénylsulfure, le diphénylsulfure, le dibenzylsulfure, et leurs combinaisons.

Les stabilisants peuvent également être des combinaisons de composés de l'ensemble des différentes classes ci-dessus.

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkène glycols, des polyol esters et / ou des polyvinyléthers.

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Le procédé de transfert de chaleur selon l'invention repose sur l'utilisation d'une installation comprenant un circuit de compression de vapeur qui contient un fluide de transfert de chaleur. Le procédé de transfert de chaleur peut être un procédé de chauffage ou de refroidissement d'un fluide ou d'un corps.

Le circuit de compression de vapeur contenant un fluide de transfert de chaleur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre le fluide de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

L'installation peut comprendre une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie.

Dans le cas d'un procédé de chauffage, de la chaleur est cédée (directement ou indirectement, via un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « pompe à chaleur ».

Il est possible d'utiliser tout type d'échangeur de chaleur pour la mise en oeuvre des fluides de transfert de chaleur selon l'invention, et notamment des échangeurs de chaleur à co-courant ou, de préférence, des échangeurs de chaleur à contre-courant.

Les fluides de transfert de chaleur utilisés dans le cadre de la présente invention sont des compositions binaires de HFO-1234ze et de NH₃.

Le HFO1234ze peut être sous forme cis ou sous forme trans ou est un mélange de forme cis et de forme trans, et dans laquelle, de préférence, au moins 80 % ou au moins 90 % ou au moins 95 % ou au moins 98 % ou au moins 99 % du 1,3,3,3-tétrafluoropropène est sous forme trans.

Par composition binaire, on entend soit une composition consistant en HFO-1234ze et NH₃; soit une composition consistant essentiellement en HFO-1234ze et NH₃, mais pouvant contenir des impuretés à raison de moins de 1 %, de préférence moins de 0,5 %, de préférence moins de 0,1 %, de préférence moins de 0,05 % et de préférence moins de 0,01 %.

Selon des modes de réalisation particuliers, la proportion de HFO-1234ze dans le fluide de transfert de chaleur peut être : de 0,1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Selon des modes de réalisation particuliers, la proportion de NH₃ dans le fluide de transfert de chaleur peut être : de 0,1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Il peut être préférable de ne pas avoir une proportion de NH₃ trop élevée dans le mélange, dans le cadre d'une utilisation en tant que fluide de transfert de chaleur, afin d'éviter une hausse de température trop forte à la sortie du compresseur.

Parmi les compositions ci-dessus, certaines présentent l'avantage d'être azéotropiques ou quasi-azéotropiques. Par exemple, l'azéotrope pour le mélange binaire HFO-1234ze / NH₃ est obtenu pour une proportion de NH₃ d'environ 81 mol% (± 4 %), à une température de 5°C (± 1°C) et à une pression de 5,6 bar (± 0,5 bar).

On désigne par « quasi-azéotropiques » les compositions pour lesquelles, à température constante, la pression de saturation liquide et la pression de saturation vapeur sont quasiment identiques (la différence maximale de pression étant de 10 %, voire avantageusement de 5 %, par rapport à la pression de saturation liquide).

Pour des compositions « azéotropiques », à température constante, la différence maximale de pression est voisine de 0 %.

Ces fluides de transfert de chaleur présentent un avantage de facilité de mise en oeuvre. En l'absence de glissement de température significatif, il n'y a pas de changement significatif de la composition circulante, et pas non plus de changement significatif de la composition en cas de fuite.

En outre, certaines compositions selon l'invention présentent des performances améliorées par rapport à certains fluides de transfert de chaleur connus, en particulier pour les procédés de refroidissement à température modérée, c'est-à-dire ceux dans lesquels la température du fluide ou du corps refroidi est de -15°C à 15°C, de préférence de -10°C à 10°C, de manière plus particulièrement préférée de -5°C à 5°C (idéalement d'environ 0°C).

Par ailleurs, certaines compositions selon l'invention présentent des performances améliorées par rapport à certains fluides de transfert de chaleur connus, en particulier pour les procédés de chauffage à température modérée, c'est-à-dire ceux dans lesquels la température du fluide ou du corps chauffé est de 30°C à 80°C, et de préférence de 35°C à 55°C, de manière plus particulièrement préférée de 40°C à 50°C (idéalement d'environ 45°C).

Dans les procédés de « refroidissement ou de chauffage à température modérée » mentionnés ci-dessus, la température d'entrée du fluide de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation du fluide de transfert de chaleur au condenseur est de préférence de 25°C à 90°C, notamment de 30°C à 70°C, de manière plus particulièrement préférée de 35°C à 55°C et par exemple d'environ 50°C. Ces procédés peuvent être des procédés de réfrigération, de climatisation ou de chauffage.

Certaines compositions sont également appropriées pour les procédés de chauffage à haute température, c'est-à-dire ceux dans lesquels la température du fluide ou du corps chauffé est supérieure à 90°C, par exemple supérieure ou égale à 100°C ou supérieure ou égale à 110°C, et de préférence inférieure ou égale à 120°C.

Certaines compositions selon l'invention présentent des performances améliorées par rapport à certains fluides de transfert de chaleur connus, en particulier pour les procédés de réfrigération à basse température, c'est-à-dire ceux dans lesquels la température du fluide ou du corps refroidi est de -40°C à - 10°C, et de préférence de -35°C à -25°C, de manière plus particulièrement préférée de -30°C à -20°C (idéalement d'environ -25°C).

Dans les procédés de « réfrigération à basse température » mentionnés ci-dessus, la température d'entrée du fluide de transfert de chaleur à l'évaporateur est de préférence de -45°C à -15°C, notamment de -40°C à -20°C, de manière plus particulièrement préférée de -35°C à -25°C et par exemple d'environ -30°C ; et la température du début de la condensation du fluide de transfert de chaleur au condenseur est de préférence de 25°C à 80°C, notamment de 30°C à 60°C, de manière plus particulièrement préférée de 35°C à 55°C et par exemple d'environ 40°C.

Plus généralement, les compositions selon l'invention peuvent servir à remplacer tout fluide de transfert de chaleur dans toutes les applications de transfert de chaleur, et par exemple dans la climatisation automobile. Par exemple, les compositions selon l'invention peuvent servir à remplacer :
- le 1,1,1,2-tétrafluoroéthane (R134a) ;
- le 1,1-difluoroéthane (R152a) ;
- le 1,1,1,3,3-pentafluoropropane (R245fa) ;
- les mélanges de pentafluoroéthane (R125), de 1,1,1,2-tétrafluoroéthane (R134a) et d'isobutane (R600a), à savoir les R422 ;
- le chlorodifluorométhane (R22) ;
- le mélange de 51,2 % de chloropentafluoroéthane (R115) et de 48,8 % de chlorodifluorométhane (R22), à savoir le R502 ;
- tout hydrocarbure ;
- le mélange de 20 % de difluorométhane (R32), de 40 % de pentafluoroéthane (R125) et de 40 % de 1,1,1,2-tétrafluoroéthane (R134a), à savoir le R407A ;
- le mélange de 23 % de difluorométhane (R32), de 25 % de pentafluoroéthane (R125) et de 52 % de 1,1,1,2-tétrafluoroéthane (R134a), à savoir le R407C ;
- le mélange de 30 % de difluorométhane (R32), de 30 % de pentafluoroéthane (R125) et de 40 % de 1,1,1,2-tétrafluoroéthane (R134a), à savoir le R407F ;
- le R1234yf (2,3,3,3-tétrafluoropropène) ;
- le R1234ze (1,3,3,3-tétrafluoropropène).

Les compositions selon l'invention peuvent également être utiles en tant qu'agent d'expansion, agent de propulsion (par exemple pour un aérosol), agent de nettoyage ou solvant, outre leur utilisation en tant que fluides de transfert de chaleur.

En tant qu'agent de propulsion, les compositions selon l'invention peuvent être utilisées seules ou en combinaison avec des agents de propulsion connus. L'agent de propulsion comprend, de préférence consiste en, une composition selon l'invention. La substance active devant être projetée peut être mélangée avec l'agent de propulsion et des composés inertes, des solvants ou autres additifs, pour former une composition à projeter. De préférence, la composition à projeter est un aérosol.

En tant qu'agent d'expansion, les compositions selon l'invention peuvent être comprises dans une composition d'expansion, qui comprend de préférence un ou plusieurs autres composés susceptibles de réagir et de former une mousse ou structure cellulaire dans des conditions appropriées, comme cela est connu de l'homme du métier.

En particulier, l'invention propose un procédé de préparation d'un produit thermoplastique expansé comprenant d'abord la préparation d'une composition polymérique d'expansion. Typiquement, la composition polymérique d'expansion est préparée en plastifiant une résine polymère et en mélangeant les composés d'une composition d'agent d'expansion à une pression initiale. La plastification de la résine polymère peut être effectuée sous l'effet de la chaleur, en chauffant la résine polymère pour la ramollir suffisamment pour mélanger une composition d'agent d'expansion. Généralement, la température de plastification est proche de la température de transition vitreuse ou de la température de fusion pour les polymères cristallins.

D'autres utilisations des compositions selon l'invention comprennent les utilisations en tant que solvants, agents de nettoyage ou autres. On peut citer par exemple le dégraissage par la vapeur, le nettoyage de précision, le nettoyage de circuits électroniques, le nettoyage à sec, le nettoyage abrasif, les solvants pour le dépôt de lubrifiants et d'agents de libération, et d'autres traitements de solvant ou de surface.

### EXEMPLES

Les exemples suivants illustrent l'invention sans la limiter.

### Exemple 1 - compositions azéotropiques ou quasi-azéotropiques

Une cellule sous vide équipée d'un tube saphir est refroidie à 5°C avec un bain d'huile. Une fois l'équilibre thermique atteint, la cellule est chargée de HFO-1234ze, et la pression à laquelle l'équilibre est atteint est enregistrée. Une quantité de NH₃ est introduite dans la cellule, et le contenu est mélangé afin d'accélérer la mise à l'équilibre. A l'équilibre, une quantité minimale d'échantillon est prélevée de la phase gazeuse et de la phase liquide pour une analyse par chromatographie en phase gazeuse avec un détecteur thermique.

Les données d'équilibre obtenues avec différentes compositions de HFO-1234ze et de NH₃ sont représentées sur la **figure 1**.

## Revendications

1. Composition binaire de 1,3,3,3-tétrafluoropropène et d'ammoniac.

2. Composition selon la revendication 1, comprenant en % molaire :
- de 40 à 99 % d'ammoniac et de 1 à 60 % de 1,3,3,3-tétrafluoropropène ;
- de préférence de 60 à 98 % d'ammoniac et de 2 à 40 % de 1,3,3,3-tétrafluoropropène ;
- de préférence de 70 à 95 % d'ammoniac et de 5 à 30 % de 1,3,3,3-tétrafluoropropène ;
- de préférence de 75 à 90 % d'ammoniac et de 10 à 25 % de 1,3,3,3-tétrafluoropropène ;
- de préférence de 78 à 85 % d'ammoniac et de 15 à 22 % de 1,3,3,3-tétrafluoropropène.

3. Composition selon la revendication 1 ou 2, dans laquelle le 1,3,3,3-tétrafluoropropène est sous forme cis ou sous forme trans ou est un mélange de forme cis et de forme trans, et dans laquelle, de préférence, au moins 80 % ou au moins 90 % ou au moins 95 % ou au moins 98 % ou au moins 99 % molaire du 1,3,3,3-tétrafluoropropène est sous forme trans.

4. Utilisation de la composition selon l'une des revendications 1 à 3, en tant que fluide de transfert de chaleur.

5. Utilisation selon la revendication 4, dans laquelle la composition est quasi-azéotropique, de préférence est azéotropique.

6. Composition de transfert de chaleur, comprenant la composition selon l'une des revendications 1 à 3, ainsi qu'un ou plusieurs additifs choisis parmi les lubrifiants, les stabilisants, les tensioactifs, les agents traceurs, les agents fluorescents, les agents odorants, les agents de solubilisation et leurs mélanges, ladite composition de transfert de chaleur comprenant de préférence au moins un stabilisant.

7. Installation de transfert de chaleur comprenant un circuit de compression de vapeur contenant une composition selon l'une des revendications 1 à 3 en tant que fluide de transfert de chaleur ou contenant une composition de transfert de chaleur selon la revendication 6.

8. Installation selon la revendication 7, choisie parmi les installations mobiles ou stationnaires de chauffage par pompe à chaleur, de climatisation, de réfrigération, de congélation et les cycles de Rankine, et notamment parmi les installations de climatisation automobile.

9. Procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition selon l'une des revendications 1 à 3.

10. Procédé selon la revendication 9, qui est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C ; ou qui est un procédé de chauffage d'un fluide ou d'un corps, dans lequel la température du fluide ou du corps chauffé est de 30 °C à 90 °C, et de préférence de 35°C à 60°C, de manière plus particulièrement préférée de 40°C à 50°C.

11. Procédé selon la revendication 9, qui est un procédé de refroidissement d'un fluide ou d'un corps, dans lequel la température du fluide ou du corps refroidi est de -40°C à -10°C, et de préférence de -35°C à -25°C, de manière plus particulièrement préférée de -30°C à -20°C.

12. Procédé selon la revendication 9, qui est un procédé de chauffage d'un fluide ou d'un corps, dans lequel la température du fluide ou du corps chauffé est supérieure à 90°C, de préférence supérieure ou égale à 100°C ou supérieure ou égale à 110°C, et de préférence inférieure ou égale à 120°C.

13. Procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition selon l'une des revendications 1 à 3.

14. Utilisation de la composition selon l'une des revendications 1 à 3, en tant que solvant.

15. Utilisation de la composition selon l'une des revendications 1 à 3, en tant qu'agent d'expansion.

16. Utilisation de la composition selon l'une des revendications 1 à 3, en tant qu'agent de propulsion, de préférence pour un aérosol.

17. Utilisation de la composition selon l'une des revendications 1 à 3, en tant qu'agent de nettoyage.

## Patentansprüche

1. Binäre Zusammensetzung aus 1,3,3,3-Tetrafluorpropen und Ammoniak.

2. Zusammensetzung nach Anspruch 1, umfassend in Mol-%:
- 40 bis 99% Ammoniak und 1 bis 60% 1,3,3,3-Tetrafluorpropen;
- vorzugsweise 60 bis 98% Ammoniak und 2 bis 40% 1,3,3,3-Tetrafluorpropen;
- vorzugsweise 70 bis 95% Ammoniak und 5 bis 30% 1,3,3,3-Tetrafluorpropen;
- vorzugsweise 75 bis 90% Ammoniak und 10 bis 25% 1,3,3,3-Tetrafluorpropen;
- vorzugsweise 78 bis 85% Ammoniak und 15 bis 22% 1,3,3,3-Tetrafluorpropen.

3. Zusammensetzung nach Anspruch 1 oder 2, wobei das 1,3,3,3-Tetrafluorpropen in cis-Form oder in trans-Form vorliegt oder es sich um ein Gemisch von cis-Form und trans-Form handelt, in dem vorzugsweise mindestens 80 Mol-% oder mindestens 90 Mol-% oder mindestens 95 Mol-% oder mindestens 98 Mol-% oder mindestens 99 Mol-% des 1,3,3,3-Tetrafluorpropens in trans-Form vorliegen.

4. Verwendung der Zusammensetzung nach einem der Ansprüche 1 bis 3 als Wärmeübertragungsfluid.

5. Verwendung nach Anspruch 4, wobei die Zusammensetzung quasi-azeotrop und vorzugsweise azeotrop ist.

6. Wärmeübertragungszusammensetzung, umfassend die Zusammensetzung nach einem der Ansprüche 1 bis 3 sowie ein oder mehrere Additive, die aus Schmiermitteln, Stabilisatoren, Tensiden, Tracern, Fluoreszenzmitteln, Geruchsmitteln, Solubilisatoren und Mischungen davon ausgewählt sind, wobei die Wärmeübertragungszusammensetzung vorzugsweise mindestens einen Stabilisator umfasst.

7. Wärmeübertragungsanlage, umfassend einen Dampfverdichtungskreislauf, der eine Zusammensetzung nach einem der Ansprüche 1 bis 3 als Wärmeübertragungsfluid enthält oder eine Wärmeübertragungszusammensetzung nach Anspruch 6 enthält.

8. Anlage nach Anspruch 7, ausgewählt aus mobilen oder stationären Wärmepumpenheizanlagen, Klimaanlagen, Kühlanlagen, Gefrieranlagen und Rankine-Zyklen und insbesondere aus Auto-Klimaanlagen.

9. Verfahren zum Erwärmen oder Abkühlen eines Fluids oder eines Körpers mittels eines Dampfverdichtungskreislaufs, der ein Wärmeübertragungsfluid enthält, bei dem man nacheinander das Wärmeübertragungsfluid verdampft, das Wärmeübertragungsfluid verdichtet, das Wärmeübertragungsfluid kondensiert und das Wärmeübertragungsfluid entspannt, wobei es sich bei dem Wärmeübertragungsfluid um eine Zusammensetzung nach einem der Ansprüche 1 bis 3 handelt.

10. Verfahren nach Anspruch 9, bei dem es sich um ein Verfahren zum Abkühlen eines Fluids oder eines Körpers handelt, bei dem die Temperatur des abgekühlten Fluids oder Körpers -15°C bis 15°C, vorzugsweise -10°C bis 10°C und weiter bevorzugt -5°C bis 5°C beträgt; oder bei dem es sich um ein Verfahren zum Erwärmen eines Fluids oder eines Körpers handelt, bei dem die Temperatur des erwärmten Fluids oder Körpers 30°C bis 90°C, vorzugsweise 35°C bis 60°C und weiter bevorzugt 40°C bis 50°C beträgt.

11. Verfahren nach Anspruch 9, bei dem es sich um ein Verfahren zum Abkühlen eines Fluids oder eines Körpers handelt, bei dem die Temperatur des abgekühlten Fluids oder Körpers -40°C bis -10°C, vorzugsweise -35°C bis -25°C und weiter bevorzugt -30°C bis -20°C beträgt.

12. Verfahren nach Anspruch 9, bei dem es sich um ein Verfahren zum Erwärmen eines Fluids oder eines Körpers handelt, bei dem die Temperatur des erwärmten Fluids oder Körpers größer als 90°C, vorzugsweise größer gleich 100°C oder größer gleich 110°C und vorzugsweise kleiner gleich 120°C ist.

13. Verfahren zur Verringerung der Umweltbelastung durch eine Wärmeübertragungsanlage mit einem Dampfverdichtungskreislauf, der ein anfängliches Wärmeübertragungsfluid enthält, bei dem man das anfängliche Wärmeübertragungsfluid in dem Dampfverdichtungskreislauf durch ein letztendliches Wärmeübertragungsfluid ersetzt, wobei das letztendliche Wärmeübertragungsfluid ein kleineres GWP als das anfängliche Wärmeübertragungsfluid aufweist, wobei es sich bei dem letztendlichen Wärmeübertragungsfluid um eine Zusammensetzung nach einem der Ansprüche 1 bis 3 handelt.

14. Verwendung der Zusammensetzung nach einem der Ansprüche 1 bis 3 als Lösungsmittel.

15. Verwendung der Zusammensetzung nach einem der Ansprüche 1 bis 3 als Blähmittel.

16. Verwendung der Zusammensetzung nach einem der Ansprüche 1 bis 3 als Treibmittel, vorzugsweise für ein Aerosol.

17. Verwendung der Zusammensetzung nach einem der Ansprüche 1 bis 3 als Reinigungsmittel.

## Claims

1. Binary composition of 1,3,3,3-tetrafluoropropene and ammonia.

2. Composition according to Claim 1, comprising, in mol%:
∘ from 40% to 99% of ammonia and from 1% to 60% of 1,3,3,3-tetrafluoropropene;
∘ preferably from 60% to 98% of ammonia and from 2% to 40% of 1,3,3,3-tetrafluoropropene;
∘ preferably from 70% to 95% of ammonia and from 5% to 30% of 1,3,3,3-tetrafluoropropene;
∘ preferably from 75% to 90% of ammonia and from 10% to 25% of 1,3,3,3-tetrafluoropropene;
∘ preferably from 78% to 85% of ammonia and from 15% to 22% of 1,3,3,3-tetrafluoropropene.

3. Composition according to Claim 1 or 2, in which the 1,3,3,3-tetrafluoropropene is in the cis form or in the trans form or is a mixture of cis form and trans form and in which, preferably, at least 80 mol% or at least 90 mol% or at least 95 mol% or at least 98 mol% or at least 99 mol% of the 1,3,3,3-tetrafluoropropene is in the trans form.

4. Use of the composition according to one of Claims 1 to 3 as heat-transfer fluid.

5. Use according to Claim 4, in which the composition is quasi-azeotropic, preferably azeotropic.

6. Heat-transfer composition comprising the composition according to one of Claims 1 to 3 and also one or more additives chosen from lubricants, stabilizing agents, surfactants, tracers, fluorescent agents, odorous agents, solubilizing agents and their mixtures, said heat-transfer composition preferably comprising at least one stabilizing agent.

7. Heat-transfer installation comprising a vapor compression circuit containing a composition according to one of Claims 1 to 3 as heat-transfer fluid or containing a heat-transfer composition according to claim 6.

8. Installation according to Claim 7, chosen from mobile or stationary installations for heat-pump heating, air conditioning, refrigeration or freezing and Rankine cycles and in particular from motor vehicle air conditioning systems.

9. Process for heating or cooling a liquid or a body by means of a vapor compression circuit comprising a heat-transfer fluid, said process successively comprising the evaporation of the heat-transfer fluid, the compression of the heat-transfer fluid, the condensation of the heat-transfer fluid and the reduction in pressure of the heat-transfer fluid, in which the heat-transfer fluid is a composition according to one of Claims 1 to 3.

10. Process according to Claim 9, which is a process for cooling a fluid or a body, in which the temperature of the cooled fluid or body is from -15°C to 15°C and preferably from -10°C to 10°C, more particularly preferably from -5°C to 5°C; or which is a process for heating a fluid or a body, in which the temperature of the heated fluid or body is from 30°C to 90°C and preferably from 35°C to 60°C, more particularly preferably from 40°C to 50°C.

11. Process according to Claim 9, which is a process for cooling a fluid or a body, in which the temperature of the cooled fluid or body is from -40°C to -10°C and preferably from -35°C to -25°C, more particularly preferably from -30°C to -20°C.

12. Process according to Claim 9, which is a process for heating a fluid or a body, in which the temperature of the heated fluid or body is greater than 90°C, preferably greater than or equal to 100°C or greater than or equal to 110°C, and preferably less than or equal to 120°C.

13. Process for reducing the environmental impact of a heat-transfer installation comprising a vapor compression circuit containing an initial heat-transfer fluid, said process comprising a stage of replacement of the initial heat-transfer fluid in the vapor compression circuit by a final heat-transfer fluid, the final heat-transfer fluid exhibiting a lower GWP than the initial heat-transfer fluid, in which the final heat-transfer fluid is a composition according to one of Claims 1 to 3.

14. Use of the composition according to one of Claims 1 to 3 as solvent.

15. Use of the composition according to one of Claims 1 to 3 as blowing agent.

16. Use of the composition according to one of Claims 1 to 3 as propellant, preferably for an aerosol.

17. Use of the composition according to one of Claims 1 to 3 as cleaning agent.
